Europäisches Patentamt

(19) European Patent Office

Office européen des brevets

(11) Publication number: **0 039 225**
A1

## (12) EUROPEAN PATENT APPLICATION

(21) Application number: **81301833.0**

(22) Date of filing: **24.04.81**

(51) Int. Cl.³: **C 08 J 7/04**

(30) Priority: **25.04.80 US 143587**

(43) Date of publication of application:
**04.11.81 Bulletin 81/44**

(84) Designated Contracting States:
**DE FR GB LU NL**

(71) Applicant: **AMERICAN HOECHST CORPORATION ·
Route 202-206 North
Somerville, N.J. 08876(US)**

(72) Inventor: **Cross, Virginia R.
3419 Ledgestone Drive
Houston Texas 77059(US)**

(74) Representative: **Wardrope, Alexander James
Brownlie et al,
Frank B. Dehn & Co. European Patent Attorneys Imperial
House 15-19 Kingsway
London, WC2B 6UZ(GB)**

(54) A coated, biaxially oriented polyester film and process for the production thereof.

(57) The present invention is directed to a coated, biaxially oriented polyester film having a polyester film support, a latex coating on the support which includes a cross-linkable methyl methacrylate-ethyl acrylate-methacrylamide terpolymer, and a silicone coating on at least a portion of the latex coating which is derived from a dispersion of colloidal silica in an alcohol-water solution of the partial condensate of a silanol. The present invention is also directed to a coating process for producing such films, which process involves applying the mentioned latex coating to a uniaxially drawn polyester film support, heating it to dry the coating, stretching the film in a direction normal to the direction of the uniaxially drawn film to produce a biaxially oriented film, applying the mentioned silicone coating and heating it to dry the coating.

### A Coated, biaxially oriented polyester film and process for the production thereof

The present invention is directed to abrasion resistant, coated polyester films and more particularly to polyester films having specified latex coatings and silicone coatings thereon. The present invention is also directed to coating processes for producing such abrasion resistant, coated polyester films.

Polyester films have recently found expanded applications as transparent and translucent layers applied to solid substrates and especially to transparent substrates. Thus, such films may be applied to windows of buildings and vehicles, as well as to many other types of windows and viewing or lighting media to control the transparency thereof. Additionally, polyester films have found many varied applications as independent substrates including uses in the optical arts for display purposes and in conjunction with electronic equipment having visual or optical screens and/or overlays. Also, recently developed membrane touch switches may contain an outer layer of polyester film.

While polyester films have many desirable physical properties for the above-mentioned and other uses, they do lack good abrasion resistance and have, as a result, not been as widely accepted as they otherwise might be.

Scratch resistant coatings, such as silica-containing solutions and polysilicic acid fluorinated copolymer compositions are available in the prior art. However, to date, a viable coated polyester film with high abrasion resistance has not been available for flexible films.

U.S. Patents Nos. 3,986,997 and 4,027,073 (both to H.A. Clark) describe abrasion resistant coating formulations employing dispersions of colloidal silica in alcohol-water solutions of partial condensates of various silicon-containing organic compounds. These coatings are taught to be advantageous abrasion resistant coatings and may be applied to such substrates as sheets and films of acrylic polymers, polyesters, polyamides, polycarbonates, polyimides, copolymers of acrylonitrile-styrene, of ABS, polyvinyl chloride, butyrates, polyethylenes and the like. Thus, amongst the tremendously large field of substrates suggested, are films and sheets, including polyethylene terephthalate (polyester) films. Notwithstanding such disclosures, it should be noted that, of the twenty-two examples given in both patents, the substrates employed were panels of polymethyl methacrylate, acrylic panels, mirrored acrylic and polycarbonate panels, "Lexan", glass slides, aluminum panels and styrene-acrylonitrile copolymer material. Not a single example illustrates application of the taught compositions to polyester substrates, much less to polyethylene terephthalate, particularly, flexible polyethylene terephthalate film. It has been determined that the coating materials taught in these patents do not adhere successfully to polyethylene terephthalate to produce high abrasion resistant, flexible films.

It was not until the discovery of the present invention described herein that high abrasion resistant, flexible, silicone coated polyester films could be obtained.

The present invention is directed to a coated, biaxially oriented polyester film having a polyester film support, a latex coating on the support which includes a cross-linkable methyl methacrylate-ethyl acrylate-methacrylamide terpolymer, and a silicone coating on at least a portion of the latex coating (and preferably on all of the latex coating) which silicone coating is derived from a dispersion of colloidal silica in an alcohol-water solution of the partial condensate of specified silanols. The present invention is also directed to a coating process for producing such films, which process involves applying the mentioned latex coating to a uniaxially drawn polyester film support, heating it to dry the coating, stretching the film in a direction normal to the direction of the uniaxially drawn film to produce a biaxially oriented film, applying the mentioned silicone coating and then heating it to dry the coating.

Figure 1 illustrates a cut sectional view of a preferred film of the present invention;

Figure 2 illustrates a cut sectional view of an embodiment of the present invention film which includes some optional coating; and

Figure 3 illustrates a block flow diagram of the coating process of the present invention.

The present invention clear, flexible, coated, biaxially oriented polyester film exhibits the quality physical characteristics of conventional polyester films and exhibits excellent abrasion resistance far superior to the abrasion resistance of the conventional polyester films. Additionally, the film of the present invention employs known top coats of a silicone-containing nature which, heretofore, have not been found to adhere advantageously to flexible polyester films.

The flexible polyester film support used in the present invention may be any flexible film formed from any thermoplastic film forming polyester which is produced by condensing a dicarboxylic acid or a lower alkyl diester thereof with a glycol. Among the dicarboxylic acids and their lower alkyl diesters which may be employed to form a flexible polyester film support are terephthalic; isophthalic; phthalic; 2,5-, 2,6-, and 2,7-naphthalene dicarboxylic; succinic; sebacic; adipic; azelaic; bibenzoic; the hexahydrophthalics, and bis-p-carboxy-phenoxyethane. One or more of these acids and/or their lower alkyl diesters is reacted with one or more glycols which include ethylene glycol; 1,3-propanediol; 1,4-butanediol; neopentyl glycol or 1,4-cyclohexanedimethanol. In that one or more diesters may be reacted with one or more glycols, the polyester film of this invention is not limited to homopolyesters but also includes mixed polyesters such as copolyesters.

Of the film forming polyesters within the contemplation of this invention, preferred are those containing at least a major amount of polyethylene terephthalate, the most preferred being polyethylene terephthalate. Polyethylene terephthalate film is formed from a polymer produced by polymerization of bis-(2-hydroxyethyl) terephthalate. Bis-(2-hydroxyethyl) terephthalate is itself formed as an intermediate by one of two different methods. One method for producing bis-(2-hydroxyethyl) terephthalate is by direct esterification of terephthalic acid with ethylene glycol as described in U.S. Patent 3,050,533. In this method the by-product of the reaction is water which is distilled from the reaction product. A second method for producing bis(2-hydroxyethyl) terephthalate is by transesterification of a dialkyl ester of terephthalic acid, preferably dimethyl terephthalate, with ethylene glycol. Preferably, two molecular proportions of ethylene glycol react with one molecular proportion of the dialkyl terephthalate. More preferably, more than two molecular proportions of ethylene glycol per molecular proportion of the dialkyl terephthalate are used since under these conditions the initial transesterification reaction occurs more rapidly and completely. The transesterification reaction is conducted under conditions of elevated temperature. For example, a temperature in the range of between about the boiling temperature of the reaction mixture to as high as 250°C may be used. The reaction can occur at atmospheric, sub-atmospheric or super-atmospheric pressure. The by-product of the transesterification reaction is an alkanol. For example, if dimethyl terephthalate is used, methanol is produced. The alkanol is removed from the reaction product. In order to increase the reaction rate, many known catalysts may be employed in the transesterification reaction, as desired.

After the bis-(2-hydroxyethyl) terephthalate has been produced, it may be converted to polyethylene terephthalate by heating at a temperature above the boiling point of the ethylene glycol or the reaction mixture under conditions effecting the removal of the glycol or water. The heating may occur at a temperature as high as $325^{\circ}$C, if desired. During heating, pressure is reduced so as to provide rapid distillation of the excess glycol or water. The final polyethylene terephthalate polymer may have an intrinsic viscosity, as measured in orthochlorophenol at $25^{\circ}$C, in excess of 0.3 deciliter per gram. More preferably, the intrinsic viscosity of the polymer ranges from about 0.4 to about 1.0 deciliter per gram, again measured in orthochlorophenol at $25^{\circ}$C. Still more preferably, the polyethylene terephthalate employed in the present invention has an intrinsic viscosity of about 0.5 to about 0.7 deciliter per gram as measured in orthochlorophenol at $25^{\circ}$C.

In a preferred embodiment, the polyester film forming polymer is melted and thereafter extruded onto a polished revolving casting drum to form a cast, flexible sheet of the polymer. Thereafter, the film is first uniaxially stretched and in a subsequent step is uniaxially stretched normal to the first stretching to result in a film which is biaxially stretch, that is, the film is stretched in the longitudinal and transverse direction.

In general, the polyester film support of the present invention is at least about 1 μm thick but

must be thin enough to be flexible. Desirably, the film support is about 1 μm to about 1000 μm thick, e.g. about 2 to about 500 μm thick.

The latex coating of the present invention includes a cross-linkage methylmethacrylate-ethylacrylate-methacrylamide terpolymer, which may be present in a concentration in the range of about 0.2 percent to about 45 percent by weight, based on the total weight of the latex coating. The terpolymer is further characterised by a glass transition temperature in the range of about $40^{\circ}C$ to about $50^{\circ}C$. Preferably, the terpolymer is present in a concentration in the range of between about 0.4 percent and about 10 percent by weight based on the total weight of the latex coating. In a more preferred embodiment of the instant invention, the terpolymer is present in a concentration of between about 1 percent and about 5 percent by weight, based on the total weight of the latex coating. The glass transition temperature of the terpolymer is desirably in the range of between about $43^{\circ}C$ and $47^{\circ}C$, and preferably, the glass transition temperature is about $45^{\circ}C$. In preferred embodiments, the latex coating includes an alkylated melamine formaldehyde cross-linking agent. Of these, preferred is hexamethoxymethyl melamine. The cross-linking agent is generally used in an amount of about 5 percent to about 30 percent, based on the weight of the total solids, and most preferably, about 15 percent to about 25 percent, based on the weight of the total solids.

In general, the latex coating of the present invention may be at least about 0.001 μm thick. Desirably, it is about 0.01 to about 0.5 μm thick and, preferably, is about 0.01 to about 0.05 μm thick.

As an optional feature of the present invention, an additional coating, i.e. a primer coating, may be applied to the latex coating described above. This primer coating is a cross-linkable acrylic emulsion based on polyesters of acrylic and methacrylic acids and is diluted with butyl cellosolve (ethylene glycol monobutyl ether). The acrylic coating solids should be used in an amount of about 0.2 to about 35 percent by weight, and preferably about 2 to about 10 percent based on the total weight of the emulsion coating. This optional coating may be applied in thicknesses in the ranges set forth for the latex coating above.

As additional optional features, the latex coating may be applied to the opposite side of the polyester film and may include additives, as desired. For example, an antistatic agent may be included to reduce static charge. One such agent is stearamidopropyl dimethyl-β-hydroxy ethylammonium nitrate. This agent may be used in the amount of about 2.75 to 3.25 parts by weight per one part by weight of terpolymer in the latex, and is more fully described in United States Patent No. 4214035 issued 22 July 1980. Generally this optional latex coating is at least about 0.001 μm thick. Desirably it is about 0.001 to 0.5 μm thick and preferably 0.001 to about 0.05 μm thick.

The silicone coating employed in the present invention is derived from an aqueous coating composition comprising a dispersion of colloidal silica in lower aliphatic alcohol-water solution of the partial condensate of a silanol of the formula $RSi(OH)_3$ in which R is selected from the group consisting of unsubstituted and inertly substituted alkyl radicals having one to three carbon atoms and unsubstituted and inertly substituted phenyl radicals, at least about 70 weight percent of said silanol being of the above formula wherein R is $CH_3$, said coating composition containing about 10 to about 70 weight percent of said colloidal silica and about 30 to about 90 weight percent of said partial condensate, based on the total solids weight, and, said coating composition containing about 10 to about 50 weight percent solids based on the total weight of said coating composition. (By "inertly substituted" is meant having substituents which in no way have a detrimental effect on the functional aspects of the silicone coating as employed in the product and the process of the present invention.)

It should be noted that these silicone coatings are, in some aspects, a small subset of those coatings described in the two cited prior art references to H.A. Clark and, in other aspects, are not as limited. Thus, the silicone coatings employed herein do not include all of the various substituents for R described in the prior art, on the one hand. However, on the other hand, the pH limitations of the prior art are not contained in the present invention silicone coatings. Further, the preferred pH range of the present invention coatings are at least about 7.0 to mildly alkaline, and preferabley 7.5.

Desirably, the substituent R in the above formula is $CH_3$. Also, the silicone coating in its preferred embodiments, contain as its lower alcohol either isopropanol or isobutanol (with the methanol that is formed in the preparation of the coating).

In general, the silicone coating is at least about 1 μm thick. Desirably, it is about 1 to about 15 μm thick and is preferably about 2 to about 10 μm thick.

In the coating process of the present invention,

the starting material flexible polyester film support has been formed as described above and has been uniaxially stretched, preferably longitudinally.

In the preferred yet optional embodiment, the uniaxially drawn polyester film support may be corona treated prior to coating. That is, the film may be subjected to a corona discharge by a corona discharge apparatus prior to coating. The discharge treatment decreases the hydrophobic character of the polyester film surface. Although not essential, this step permits the water-based latex coating to more easily wet the surface and thus improve the adhesion of the coating to the surface.

Next, the above described latex coating is applied to the uniaxially drawn, flexible polyester film support. Application may be by any functional coating means and roller coating, especially reverse gravure, may advantageously be employed.

After coating and before stretching in a direction normal to the uniaxially drawn film, the film is dried by heating at a temperature in the range about $90^{O}C$ to $110^{O}C$. More preferably, the range is $95^{O}C$ to $105^{O}C$.

In a preferred embodiment, the thickness of the coating, after drying, on the polyester film is at least 0.015 g of coating per $m^2$ (0.003 dry pounds per thousand square feet) of biaxially drawn film. More preferably, the dry coating weight is in the range of between about 0.015 to 0.034 $g.m^{-2}$ (0.003 pounds to 0.007 pounds per thousand square feet) of coated film. These thicknesses given in $g.m^{-2}$ (and pounds per thousand square feet) are approximate and to the extent that they result in different thicknesses over those described above in $\mu m$, the $\mu m$ thicknesses above govern.

Next, the coated film is stretched in a direction which is normal to the direction of the original uniaxial stretching so as to produce a biaxially coated film. Degree of stretching in each direction is a matter of choice and is well within the purview of the artisan.

The above described optional primer coating may be applied, if desired, by conventional techniques, and dried at temperatures described for drying the latex coating.

The silicone coating described above is next applied, using any functional technique, especially roller coating, e.g. direct gravure. It is subsequently heated at temperatures of about 90°C to about 175°C, desirably about 100°C to about 150°C.

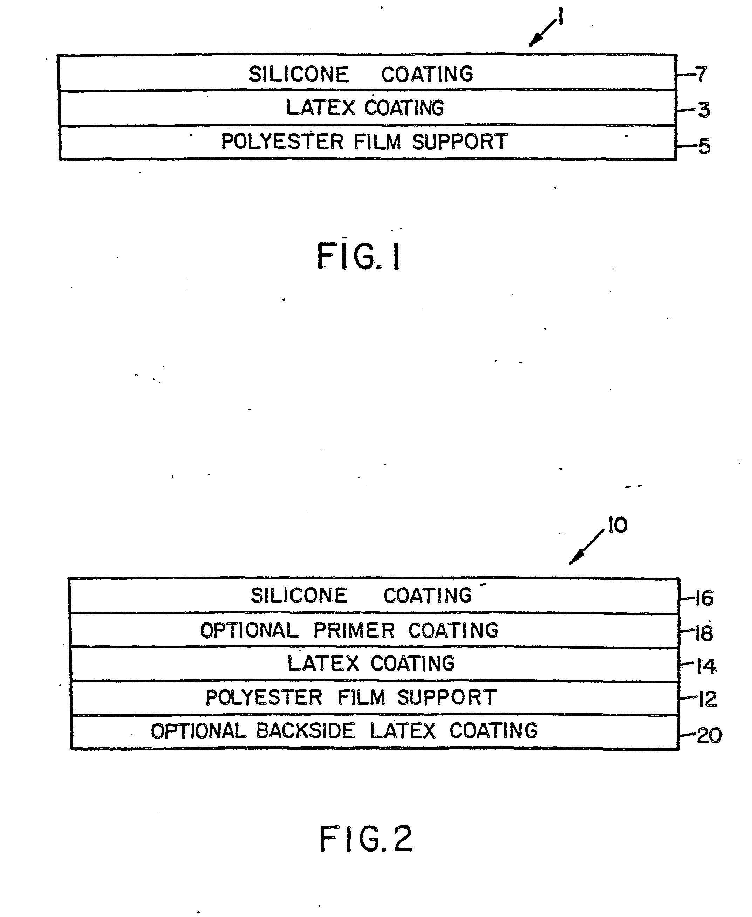

As shown in Figure 1, a preferred embodiment of the present invention involves the application of a latex coating 3 onto polyester film support 5, and then the application of a silicone coating 7, with appropriate stretching and heating steps as outlined above, to result in a clear, flexible, coated, biaxially oriented polyester film 1.

Figure 2 illustrates a film 10 of the present invention having polyester film support 12, latex coating 14, and silicone coating 16, as well as optional primer coating 18 between the latex coating 14 and the silicone coating 16. Additionally, an optional latex coating 20 on the opposite side of the film 10 is also shown. A latex coating such as 14 or an antistat coating could be applied as this optional coating 20. Variations of this illustrated coated film 10 without exceeding the scope of the present invention should now be apparent to the artisan.

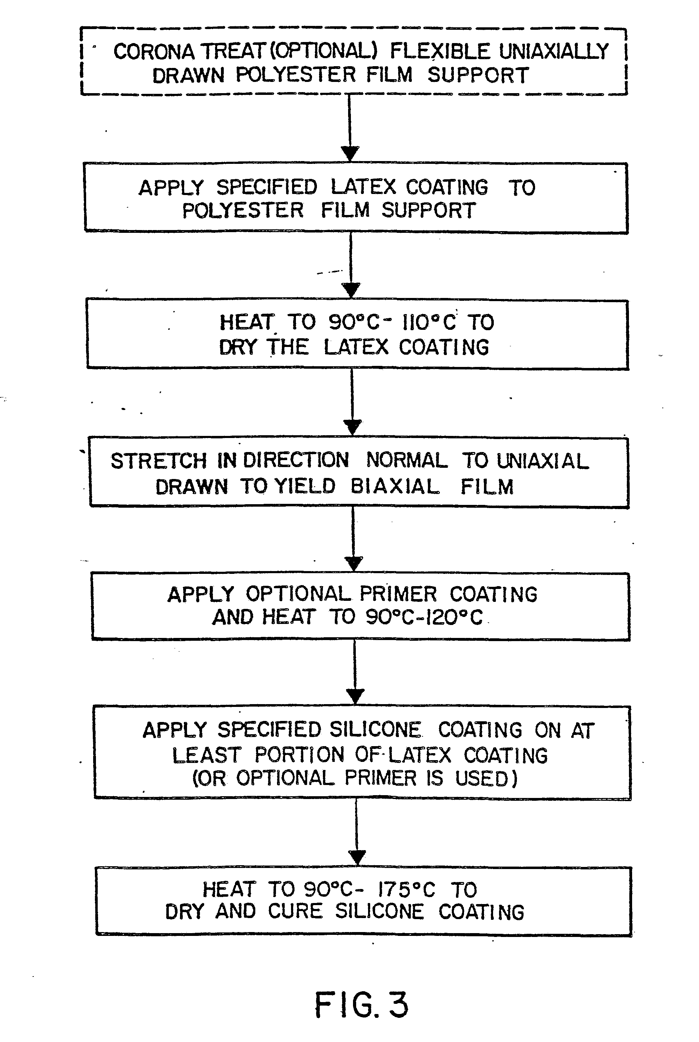

Figure 3 illustrates a block diagram of the coating process of the present invention. First, an optional corona treatment may or may not be applied to the flexible, uniaxially drawn polyester film support. Next, the specified latex coating is applied to the film support and it is then heated to $90^{\circ}$ to $110^{\circ}$C to dry the latex coating.

The film is then stretched normally to the original draw to produce a biaxially oriented film. The optional primer coating may then be applied, if desired, and dried. Lastly, the silicone coating is applied, and then it is heated to $90^{\circ}$C to $175^{\circ}$C to dry and cure the silicone coating.

According to another aspect of the invention there is provided the film provided by the above described process.

EXAMPLES

The following non-limiting Examples 3 to 11 are given to illustrate the invention. Examples 1 and 2 are comparison examples.

Example 1

Polyethylene terephthalate polymer is melted and extruded through a slit die onto a casting drum maintained at a temperature of about 20°C. The melt freezes to form a cast sheet. The cast sheet is longitudinally stretched at a draw ratio of approximately 3.6:1 while being maintained at a temperature of about 80°C.

The longitudinally drawn film is heated to a temperature of about 100°C and is then stretched in the transverse direction at a draw ratio of 3.6:1 to produce a biaxially drawn film. The biaxially drawn film is heat set at a temperature of about 230°C to yield an uncoated, clear, biaxially oriented polyester film.

Example 2

Polyethylene terephthalate polymer is melted and extruded through a slit die onto a casting drum maintained at a temperature of about 20°C. The melt freezes to form a cast sheet. The cast sheet is longitudinally stretched at a draw ratio of approximately 3.6:1 while being maintained at a temperature of about 80°C.

The longitudinally drawn film is then corona treated by a corona discharge apparatus and thereinafter coated with a latex coating by reverse gravure coating.

A latex coating is coated onto the surface of the polyester film and includes 3.5 percent by weight, based on the total weight of the coating composition, of methyl methacrylate-ethyl acrylate-methacrylamide terpolymer. The ratio of the components of the terpolymer methyl methacrylate: ethyl acrylate: methacrylamide is about 69:26:5. The terpolymer is cross-linkable using a melamine-formaldehyde cross-linking agent, hexamethoxymethyl melamine, and is characterized by a glass transition temperature of 45°C. The weight ratio of terpolymer to cross-linker is about 80:20. The remaining constituent, water, comprises about 96.5 percent by weight of the latex coating.

The corona-treated, longitudinally drawn, coated film is dried at a temperature of about 100°C. Thereafter, the film is stretched in the transverse direction at a draw ratio of 3.6:1 to produce a biaxially drawn film. The biaxially drawn film is heat set at a temperature of 230°C. The thickness of the coating layer is about 0.02 $\mu$m. (This coating may be applied to one or both sides.)

Example 3

A siloxane coating composition, formulated principally by combining an aqueous colloidal dispersion of sub-$\mu$m-sized silica, also known as silicon dioxide, with a siloxane resin such as an alkylalkoxysilane, namely methyl trimethoxysilane, is aged approximately four days to produce a partial condensate of methyltrihydroxysilane. The relative proportions of the main components are 35 percent silica and 65 percent siloxane. The partial condensate is then diluted to 20 percent solids with isobutanol. Finally, just before coating, hydrated sodium acetate is added to the composition in the proportion of 0.5 percent based on coating solids to catalyze the condensation and to crosslink the mixture when coated. The aforementioned composition is hereafter referred to as the silicone coating. It should be noted that the catalyst is employed merely to enhance the rate of cross-linking and, although sometimes useful, is not essential to the present invention. (In fact, equally satisfactory results have been obtained with some coating equipment using no catalyst at all, e.g., where post-coat curing is feasible.)

A 21.6 x 27.9 cm (8.5 x 11 inch) sheet of 0.127 mm (5 mil; 0.005 inch) film of Example 2 is coated with the silicone coating using a No. 12 wire wound coating rod. The coated film is allowed to air dry at room temperature for approximately twenty minutes and is then dried in a forced air oven for approximately forty-five minutes at

120°C.    The average dry coating thickness of this silicone coating is 2.54 μm (0.1 mil).

The abrasion resistance of the coated film is evaluated by three different methods and found to be excellent.    The test methods are: (1) Falling Sand Abrasion; (2) Gardner Washability; and, (3) Taber Abrasion. Test results are shown in Tables I, II and III, respectively.

In The Falling Sand Abrasion Test, the silicone coated film is subjected to abrasion by 50 mls of falling sand.    A Gardner Falling Sand Abrader is used to subject the film to the sand falling from a height of three feet through a 1.9 cm (0.75 inch) I.D. guide tube.    The film specimen is placed at a 45° angle to and 2.54 cm (one inch) from the lower end of the tube.    The sand used is Ottawa silica sand No. 20-30.    Before and after falling sand abrasion, optical haze of the film is measured using a Gardner hazemeter.    Delta (Δ) haze, having units in percent, was calculated from the difference in percent haze before and after abrasion.    Table I gives the percent haze and percent Δ haze values for silicone coated and control film subjected to falling sand abrasion. Each value is an average of five readings.    The present invention coated sample of Example 3 exhibits considerably superior abrasion resistance over the control sample of Example 2, with a more than 25-fold improvement in percent Δ haze.

TABLE I. FALLING SAND ABRASION (% HAZE)

| FILM | BEFORE | AFTER | Δ |
|---|---|---|---|
| Control Film of Example 2 (Non-Silicone Coated) | 1.57 | 28.0 | 26.4 |
| Silicone Coated Film of Example 3 (Present Invention) | 1.72 | 2.78 | 1.06 |

In the Gardner Washability Abrasion Test, the silicone coated film is subjected to the back and forth scrubbing action of a dry nylon brush weighted to 0.454 kg (one pound). A Gardner Washability Apparatus is used for this testing. The film experiences five hundred back and forth cycles. As in the falling sand abrasion testing, Gardner haze is measured before and after abrasion. The following Table II gives percent haze and percent Δhaze for the Gardner washability testing on silicone coated and control film. Each value is based on an average of five readings.

TABLE II. GARDNER WASHABILITY ABRASION (% HAZE)
(500 Cycles)

| FILM | BEFORE | AFTER | Δ |
|------|--------|-------|---|
| Control Film of Example 2 (Non-Silicone Coated) | 1.63 | 6.82 | 4.94 |
| Silicone Coated Film of Example 3 (Present Invention) | 1.84 | 2.96 | 1.12 |

Taber Abrasion is performed on the films using the method ASTM D 1044-56 "Standard Method of Test for Resistance of Transparent Plastics to Surface Abrasion." The film is subjected to 50 and 500 cycles of Taber Abrasion using CS-10F rubber wheels loaded with 500 grams. As before, Gardner haze is measured before and after abrasion. The following Table III gives the haze values for Taber Abrasion for silicone coated and control film. Again the silicone coated film gives superior abrasion resistance. Each value is an average of five readings.

### TABLE III. TABER ABRASION (% HAZE)

| | 50 Cycles | | |
|---|---|---|---|
| FILM | BEFORE | AFTER | Δ |
| Control Film of Example 2 (Non-Silicone Coated) | 1.84 | 35.1 | 33.1 |
| Silicone Coated Film of Example 3 (Present Invention) | 1.80 | 6.80 | 5.00 |

| | 500 Cycles | | |
|---|---|---|---|
| FILM | BEFORE | AFTER | Δ |
| Control Film of Example 2 (Non-Silicone Coated) | 1.82 | 48.0 | 46.2 |
| Silicone Coated Film of Example 3 (Present Invention) | 1.72 | 15.4 | 13.7 |

In all cases, the silicone coated film of the present invention gave extremely high abrasion resistance as indicated by the low percent Δ haze values compared to the control film of Example 2.

Example 4

An acrylic water-based emulsion is coated onto the film of Example 2 prior to coating with the silicone-based abrasion resistant coating given in Example 3. The acrylic emulsion is composed of a terpolymer of butylacrylate, methyl methacrylate and methacrylamide in the relative proportions of 69:26:5, respectively. The terpolymer is cross-linkable using a melamine-formaldehyde cross-linking agent, hexamethoxymethyl-melamine, and is characterized by a glass transition temperature Tg of 38°C. The ratio of terpolymer to cross-linker is about 80:20. The remaining constituents, water and butyl cellosolve, comprise 96 percent by weight of the emulsion. The ratio of butyl cellosolve to water is 1:2. The solids are mixed together with the water and butyl cellosolve to produce a uniform mixture of the emulsion, which will hereafter be known as the primer.

A 21.6 x 27.9cm (8.5 x 11 inch) sheet of 0.127 mm (5 mil) film of Example 2 is coated with the primer using a No. 12 wire-wound coating rod. The coated film is air dried in a hood at room temperature for thirty minutes and oven dried in a forced air oven for thirty minutes at 120°C. After cooling, the primed film is coated with the silicone coating. The coated film is air dried at room temperature for twenty minutes and then dried in a forced air oven at 120°C for forty-five minutes.

The abrasion resistance of the primed and coated film is evaluated by Falling Sand Abrasion, Gardner Washability, and Taber Abrasion according to the same procedures given in Example 3. The following tables give the percent haze and percent $\Delta$ haze for each method of abrasion for the primed and coated film of this example, the coated sample of Example 3, and the control film of Example 2. Each value given is an average of five readings. These data suggest that priming does not improve the abrasion resistance of the silicone coated film.

| TABLE IV. FALLING SAND ABRASION (% HAZE) 5 mls sand | | | |
|---|---|---|---|
| FILM | BEFORE | AFTER | $\Delta$ |
| Control Film of Example 2 (Non-Silicone Coated) | 1.57 | 28.0 | 26.4 |

| FILM | BEFORE | AFTER | Δ |
|---|---|---|---|
| Silicone Coated Film of Example 3 (Present Invention) | 1.72 | 2.78 | 1.06 |
| Primed and Silicone Coated Film of Example 4 (Present Invention) | 1.76 | 5.18 | 3.42 |

TABLE V.  GARDNER WASHABILITY ABRASION (% HAZE)

500 Cycles

| FILM | BEFORE | AFTER | Δ |
|---|---|---|---|
| Control Film of Example 2 (Non-Silicone Coated) | 1.63 | 6.82 | 4.94 |
| Silicone Coated Film of Example 3 (Present Invention) | 1.84 | 2.96 | 1.12 |
| Primed and Silicone Coated Film of Example 4 (Present Invention) | 1.77 | 3.06 | 1.29 |

TABLE VI. TABER ABRASION (% HAZE)

50 Cycles

| FILM | BEFORE | AFTER | Δ |
|---|---|---|---|
| Control Film of Example 2 (Non-Silicone Coated) | 1.84 | 35.1 | 33.3 |
| Silicone Coated Film of Example 3 (Present Invention) | 1.80 | 6.80 | 5.00 |

| Primed and Silicone Coated Film of Example 4 (Present Invention) | 1.96 | 5.23 | 3.27 |

500 Cycles

| FILM | BEFORE | AFTER | Δ |
|---|---|---|---|
| Control Film of Example 2 (Non-Silicone Coated) | 1.82 | 48.0 | 46.2 |
| Silicone Coated Film of Example 3 (Present Invention) | 1.72 | 15.4 | 13.7 |
| Primed and Silicone Coated Film of Example 4 (Present Invention) | 1.82 | 18.3 | 16.5 |

Examples 5 and 6

For Example 5, a 21.6 x 27.9 cm (8.5 x 11 inch) sheet of 0.127mm (5 mil) film of Example 1 is coated with the primer of Example 4 using a No. 6 wire-wound coating rod. The coated film is air dried in a hood at room temperature for thirty minutes and oven dried in a forced air oven for thirty minutes at 120°C. After cooling, the primed film is coated with the silicone coating using a No. 12 wire-wound rod. The coated film is air dried at room temperature for twenty minutes and then dried in a forced air oven at 120°C for forty-five minutes.

For Example 6, a 21.6 x 27.9cm (8.5 x 11 inch) sheet of 0.127 mm (5 mil) film of Example 1 is coated with the silicone coating of Example 3 using a No. 12 wire-wound coating rod. The coated film is air dried in a hood at room temperature for twenty minutes and oven dried in a forced air oven for forty-five minutes at 120°C.

The abrasion resistance of Examples 5 and 6 is evaluated by Falling Sand Abrasion according to the prodedures given in Example 3 and compared to Examples 3 and 4, prepared and tested in the same manner, and to the uncoated control films of Examples 1 and 2. Table VII gives the percent haze and percent Δ haze for each example using 250 mls sand to abrade the samples. Each value is an average of five readings.

TABLE VII. FALLING SAND ABRASION (% HAZE)
250 mls sand

| FILM | BEFORE | AFTER | Δ |
|------|--------|-------|---|
| Control Film of Example 1 (Non-Silicone Coated) | 1.33 | 52.1 | 50.8 |
| Control Film of Example 2 (Non-Silicone Coated) | 2.09 | 64.3 | 62.2 |
| Silicone Coated Film of Example 3 (Present Invention) | 2.23 | 11.2 | 9.0 |
| Primed and Silicone Coated Film of Example 4 (Present Invention) | 2.44 | 11.6 | 9.2 |
| Primed and Silicone Coated Film of Example 5 (Present Invention) | 2.54 | 15.8 | 13.3 |
| Silicone Coated Film of Example 6 (Present Invention) | 2.24 | 35.8 | 33.6 |

These data show that the unprimed but silicone coated film of Example 3 is more abrasion resistant than the primed and silicone coated film of Example 5, which in turn is more abrasion resistant than the silicone coated film of

Example 6. These data also support the conclusion found in Example 4 that priming does not enhance the abrasion resistance of the silicone coated film of Example 2, i.e., the abrasion resistance of Example 4 is no better than Example 3. All Examples having a silicone coating, i.e., Example 3, 4, 5 and 6, have better abrasion resistance than the non-silicone coated film of Examples 1 and 2.

In addition to testing abrasion resistance, the adhesion of the silicone coating is evaluated for the films of Examples 3, 4, 5 and 6 by cross-hatching with a scalpel and then testing with an adhesive tape pull using Scotch tape No. 610. The coatings on Examples 3, 4, and 5 had 100% adhesion, while the coating on Example 6 had no adhesion.

Example 7

The film of Example 2 is coated with the silicone coating of Example 3 using reverse roll coating. The poly(ethylene terephthalate) film of Example 2 is 23.4 $\mu$m (0.92 mil) in thickness. The silicone coating is catalyzed with 0.5 percent sodium acetate hydrate based on the solids weight of the silicone coating, as mentioned in Example 3. The curing temperature is varied between 100°C and 150°C, and the line speed in the 4.88 m (sixteen foot) oven is adjusted beteen 4.88 and 39 m. min$^{-1}$ (16 and 128 feet per minute) such that the coating is completely cured. Minimum cure conditions for this film are 100°C at 9.75 m.min$^{-1}$ (thirty-two feet per minute) line speed. The thickness of the silicone coating is varied by adjusting the reverse roll gap and the speeds of the metering and applicator rolls, in order to correlate abrasion resistance with dry coating thickness and thereby determine the optimum coating thickness. Tables VIII IX give percent haze and percent $\Delta$haze for various dry coating thicknesses of the silicone coating on the polyester film of Examples 2 and 7 using falling sand abrasion. Both 50 mls and 250 mls sand were used for the abrasion.

TABLE VIII. FALLING SAND ABRASION (% HAZE)
50 mls sand

| SAMPLE | BEFORE | AFTER | Δ | DRY COATING THICKNESS μm (Mil) |
|---|---|---|---|---|
| 23.4 μm (0.92 mil) Film of Example 2 (Control) | 1.11 | 27.5 | 27.4 | – |
| A (Present Invention Example 7) | 0.55 | 7.83 | 7.28 | 0.76 (0.03) |
| B (Present Invention Example 7) | 0.93 | 6.68 | 5.75 | 1.52 (0.06) |
| C (Present Invention Example 7) | 0.75 | 5.70 | 4.95 | 1.78 (0.07) |
| D (Present Invention Example 7) | 0.83 | 4.13 | 3.30 | 2.29 (0.09) |
| E (Present Invention Example 7) | 1.05 | 3.57 | 2.52 | 3.56 (0.14) |
| F (Present Invention Example 7) | 1.47 | 3.06 | 1.59 | 6.10 (0.24) |
| G (Present Invention Example 7) | 3.35 | 4.77 | 1.42 | 7.37 (0.29) |

TABLE IX. FALLING SAND ABRASION (% HAZE)
250 mls sand

| SAMPLE | BEFORE | AFTER | Δ | DRY COATING THICKNESS, $\mu$m (Mil) |
|---|---|---|---|---|
| 23.4 $\mu$m (0.92 mil) Film of Example 2 (Control) | 1.44 | 51.1 | 49.6 | — |
| H (Present Invention Example 7) | 0.71 | 21.8 | 21.1 | 0.76 (0.03) |
| I (Present Invention Example 7) | 0.59 | 15.3 | 14.7 | 1.52 (0.06) |
| J (Present Invention Example 7) | 0.73 | 10.0 | 9.3 | 2.79 (0.11) |
| K (Present Invention Example 7) | 1.06 | 9.56 | 8.5 | 3.30 (0.13) |
| L (Present Invention Example 7) | 1.86 | 8.35 | 6.5 | 5.08 (0.20) |
| M (Present Invention Example 7) | 1.20 | 7.69 | 6.5 | 5.59 (0.22) |
| N (Present Invention Example 7) | 2.70 | 7.20 | 4.5 | 7.37 (0.29) |
| O (Present Invention Example 7) | 3.27 | 10.2 | 6.9 | 7.62 (0.30) |

These data show that the abrasion resistance improves asymptotically with dry coating thickness within a range of thicknesses. The inflection of the relationship occurs at approximately 5.08 $\mu$m (0.2 mil) dry coating thickness. This suggests that in the tradeoff between improved abrasion resistance and the expense of a thicker coating, an optimum coating thickness may be approximately 5.08 $\mu$m ($\pm$) 1.27$\mu$m) [0.2 mil ($\pm$ 0.05 mil)].

The film of this Example is also tested for blocking tendencies. The coated film is tested for Coefficient of Friction (COF) to the film of

Example 1 (plain polyester film) and the film of Example 2 (latex coated polyester film). The coated surface blocks (i.e. does not slip) to the plain polyester film of Example 1, but does slip to the latex coated film surface of Example 2 and gives an acceptable COF of 0.3 to 0.4, suitable for winding rolls of the film. If a surface blocks to another surface, an acceptable roll cannot be wound.

Examples 8, 9, and 10

The film of Example 2 is coated with the silicone coating of Example 3 except that different solvents are substituted for the isobutanol in the coating. In place of isobutanol, the coating is diluted to 20 percent coating solids with isopropanol, with methyl carbitol, and with a 1:1 solution of methyl cellosolve acetate and 1,1,1-trichloroethane, for Examples 8, 10, and 9, respectively. The amount of catalyst used is reduced from 0.50 percent based on the weight of the coating solids to 0.25 percent. The reduction in catalyst concentration does not impair the full curing of the coating.

The coating is applied by direct gravure using a trihelically patterned gravure cylinder having 9.45 lines per cm. (twenty-four lines per inch). . The drying oven is 4.57 m (fifteen feet) long and divided into two 2.29 m (7.5 foot) zones. The first zone is kept at 93°C (200°F) and the second zone at 121°C (250°F). Lower air velocity is used in Zone 1 than in Zone 2. The line speed employed is 1.83 m.min$^{-1}$ (six feet per minute).

The coating flow-out and overall quality are compared for each coating containing a different solvent or solvent blend. The following table summarizes the results from this comparison.

| TABLE X. COATING QUALITY | |
| --- | --- |
| SOLVENT OR SOLVENT BLEND | COMMENTS |
| Example 3 - Isobutanol | Good coating flow-out, but with a slight coating pattern. |
| Example 8 - Isopropanol | Excellent coating flow-out and distortion free coating. |
| Example 9 - Methyl Cellosolve acetate + 1,1,1-trichloroethane | Good coating flow-out, but with a slight coating pattern and some coating dimples. |
| Example 10 - Methyl carbitol | Poor coating flow-out. The coating foamed, which is unacceptable. A smoothing bar was required after the gravure coater which resulted in a thinner coating with less abrasion resistance. |

These observations indicate that isopropanol is the preferred solvent of those tested to achieve a high quality laydown of the silicone coating, with isobutanol being second choice.

Abrasion testing is done on the films coated with the silicone coating using the four different solvents of Examples 3, 8, 9, and 10. Abrasion resistance of the coated film is approximately the same for the coating in isopropanol, isobutanol, and the methyl cellosolve acetate/1,1,1-trichloroethane blend. The abrasion resistance of the film coated with the silicone coating in methyl carbitol is lower due to the foaming of the coating which requires the use of a smoothing bar to achieve an even coating. The smoothing bar is rotated opposite to the film direction and doctors off some of the coating resulting in a thinner coating with less abrasion resistance. The percent haze and percent Δ haze for falling sand abrasion on these samples are given in Table XI.

TABLE XI. FALLING SAND ABRASION

| SAMPLE | COATING SOLVENT | HAZE (%) | | | | | |
|--------|-----------------|----------|-------|------|--------|-------|------|
| | | 50 mls sand | | | 250 mls sand | | |
| | | BEFORE | AFTER | Δ | BEFORE | AFTER | Δ |
| Example 3 | Isobutanol | 1.96 | 5.98 | 4.02 | 1.90 | 16.1 | 14.2 |
| Example 3 | Isobutanol | 1.57 | 5.82 | 4.25 | 1.67 | 14.7 | 13.0 |
| Example 8 | Isopropanol | 1.13 | 4.41 | 3.28 | 1.09 | 13.7 | 12.6 |
| Example 8 | Isopropanol | 0.99 | 6.13 | 5.14 | 1.12 | 13.4 | 12.3 |
| Example 8 | Isopropanol | 2.33 | 6.67 | 4.34 | 2.36 | 14.2 | 11.8 |
| Example 9 | Methyl Cellosolve acetate + 1,1,1-trichloroethane | 1.11 | 6.03 | 4.92 | 1.36 | 11.6 | 10.2 |
| Example 10 | Methyl carbitol | 1.20 | 18.2 | 17.0 | 1.29 | 30.8 | 29.5 |
| Example 10 | Methyl carbitol | 1.21 | 7.66 | 6.45 | 1.35 | 33.4 | 32.1 |

Example 11

The film of Example 2 is coated with the silicone coating of Example 3 using the reverse roll method. The ambient conditions are such that the coating appeared hazy after drying. The haze is due to solvent blushing caused by high relative humidity. The haze was eliminated by adding a little (about 5 percent) diacetone alcohol to the silicone coating until the coating cured haze-free. More or less diacetone alcohol may be needed on some occasions depending on the prevailing relative humidity, as desired.

## CLAIMS

1.    A coated biaxially oriented polyester film comprising:

    (a)    a polyester film support;

    (b)    a latex coating on at least one side of said polyester film support, having a thickness of at least about 0.001 $\mu$m, said latex coating including a cross-linkable methyl methacrylate-ethyl acrylate-methacrylamide terpolymer having a glass transition temperature in the range of $40^{\circ}$C to $50^{\circ}$C; and,

    (c)    a silicone coating on at least a portion of said latex coating, said silicone coating having a thickness of at least 1 $\mu$m, said silicone coating being derived from an aqueous coating composition comprising a dispersion of colloidal silica in a lower aliphatic alcohol-water solution of the partial condensate of a silanol of the formula $RSi(OH)_3$ (in which R is selected from unsubstituted and inertly substituted alkyl radicals having one to three carbon atoms and unsubstituted and inertly substituted phenyl radicals), at least about 70 weight percent of said silanol being of the above formula wherein R is $CH_3$, said coating composition containing 10 to 70 weight percent of said colloidal silica and 30 to 90 weight percent of said partial condensate, based on the total solids weight, and, said coating composition containing 10 to 50 weight percent solids based on the total weight of said coating composition.

2.    The film of claim 1 wherein said latex coating terpolymer is cross-linked with an alkylated melamine formaldehyde.

3.    The film of claim 2 wherein said alkylated melamine formaldehyde is hexamethoxymethyl melamine.

4.    A film according to any one of the preceding claims wherein said latex coating has a thickness of 0.01 to 0.5 $\mu$m.

5.    A film according to anyone of the preceding claims wherein said lower aliphatic alcohol comprises isopropanol or isobutanol.

6.    A film according to any one of the preceding claims wherein R in the silanol of formula $RSi(OH)_3$ is $CH_3$.

7.    A film according to anyone of the preceding claims wherein said polyester film support has said latex coating on both sides thereof and said silicone coating on only one side thereof.

8.    A film according to any one of the preceding claims wherein said film contains an additional primer coating between said latex coating and said silicone coating, said primer coating being a self-curing emulsion based on ester of acrylic acid and diluted with butyl cellosolve.

9.    A process for producing a coated, biaxially oriented polyester film comprising the steps of:

(a)    applying a latex coating of at least about 0.001 $\mu$m to a flexible, uniaxially drawn, polyester film support, said latex
coating including a cross-linkable methyl
methacrylate-ethyl acrylate-methacrylamide
terpolymer having a glass transition
temperature in the range of $40^{\circ}C$ to $50^{\circ}C$;

(b)  heating the latex coated polyester film
to a temperature within the range of $90^{\circ}C$
to $110^{\circ}C$, whereby said latex coating is
dried;

(c)  stretching the dried, latex coated polyester
film in a direction normal to the direction
of the uniaxially drawn film whereby biaxially
drawn film is produced;

(d)  applying a silicone coating on at least a
portion of said latex coating, said silicone
coating having a thickness of at least 1 $\mu m$,
said silicone coating being derived from an
aqueous coating composition comprising a
dispersion of colloidal silica in lower
aliphatic alcohol-water solution of the
partial condensate of a silanol of the
formula $RSi(OH)_3$ (in which R is selected
from unsubstituted and inertly substituted
alkyl radicals having one to three carbon
atoms and unsubstituted and inertly substituted phenyl radicals), at least about
70 weight percent of said silanol being
of the above formula wherein R is $CH_3$, said
coating composition containing 10 to 70
weight percent of said colloidal silica
and 30 to 90 weight percent of said partial
condensate, based on the total solids weight,
and said coating composition containing 10 to
50 weight percent solids based on the total weight of said coating composition; and

(e)   heating the silicone coated, latex coated, biaxially oriented polyester film to a temperature within the range of 90°C to 175°C, whereby said silicone coating is dried.

10.   A process according to claim 9 wherein said latex coating terpolymer is cross-linked with an alkylated melamine formaldehyde.

11.   A process according to claim 10 wherein said alkalated melamine formaldehyde is hexamethoxymethyl melamine.

12.   A process according to any one of claims 9 to 11 wherein said polyester film support contains at least a major amount of polyethylene terephthalate.

13.   A process according to any one of claims 9 to 12 wherein said polyester film support has a thickness of at least 1 μm.

14.   A process according to claim 13 wherein said polyester film support has a thickness of 1 μm to 1,000 μm.

15.   A process according to any one of claims 9 to 14, wherein said latex coating has a thickness of 0.01 to 0.5 μm.

16.   A process according to claim 15 wherein said latex coating has a thickness of 0.01 to 0.05 μm.

17.   A process according to any one of claims 9 to 16 wherein said lower aliphatic alcohol comprises isopropanol or isobutanol.

18.   A process according to any one of claims 9 to 17 wherein R in the silanol of formula $RSi(OH)_3$ is $CH_3$.

19. A process according to any one of claims 9 to 18 wherein said polyester film support contains said latex coating on both sides thereof and contains said silicone coating on only one side thereof.

20. A process according to any one of claims 9 to 19 wherein said uniaxially drawn film has been longitudinally uniaxially drawn.

21. A process according to any one of claims 9 to 20 wherein said coating step (a) and coating step (d) are performed by roller coating or by gravure coating.

22. A process according to any one of claims 9 to 21 wherein said silicone coated, latex coated, biaxially oriented film is heated in step (e) to a temperature of 100°C to 150°C.

23. A process according to any one of claims 9 to 22 wherein, prior to applying said silicone coating, an additional primer coating is applied to said latex coating, said primer coating being a self-curing emulsion based on ester of acrylic acid and diluted with butyl cellosolve.

SILICONE COATING ⎯7
LATEX COATING ⎯3
POLYESTER FILM SUPPORT ⎯5

FIG. I

SILICONE COATING ⎯16
OPTIONAL PRIMER COATING ⎯18
LATEX COATING ⎯14
POLYESTER FILM SUPPORT ⎯12
OPTIONAL BACKSIDE LATEX COATING ⎯20

FIG. 2

0039225

```
┌ ─ ─ ─ ─ ─ ─ ─ ─ ─ ─ ─ ─ ─ ─ ─ ─ ─ ─ ─ ─ ─ ─ ─ ┐
│   CORONA TREAT (OPTIONAL) FLEXIBLE UNIAXIALLY  │
│      DRAWN POLYESTER FILM SUPPORT              │
└ ─ ─ ─ ─ ─ ─ ─ ─ ─ ─ ─ ─ ─ ─ ─ ─ ─ ─ ─ ─ ─ ─ ─ ┘
                      │
                      ▼
┌───────────────────────────────────────────────┐
│       APPLY SPECIFIED LATEX COATING  TO        │
│          POLYESTER  FILM SUPPORT               │
└───────────────────────────────────────────────┘
                      │
                      ▼
┌───────────────────────────────────────────────┐
│        HEAT TO 90°C - 110°C TO                 │
│        DRY THE LATEX COATING                   │
└───────────────────────────────────────────────┘
                      │
                      ▼
┌───────────────────────────────────────────────┐
│   STRETCH IN DIRECTION NORMAL TO UNIAXIAL      │
│     DRAWN TO YIELD BIAXIAL  FILM               │
└───────────────────────────────────────────────┘
                      │
                      ▼
┌───────────────────────────────────────────────┐
│      APPLY OPTIONAL PRIMER COATING             │
│       AND HEAT TO 90°C-120°C                   │
└───────────────────────────────────────────────┘
                      │
                      ▼
┌───────────────────────────────────────────────┐
│   APPLY SPECIFIED SILICONE COATING ON AT       │
│     LEAST PORTION OF LATEX COATING             │
│       (OR OPTIONAL PRIMER IS USED)             │
└───────────────────────────────────────────────┘
                      │
                      ▼
┌───────────────────────────────────────────────┐
│       HEAT TO 90°C - 175°C TO                  │
│     DRY AND CURE SILICONE COATING              │
└───────────────────────────────────────────────┘
```

FIG. 3

**0039225**

European Patent
Office

**EUROPEAN SEARCH REPORT**

Application number
EP 81 30 1833

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| D | <u>US - A - 3 986 997</u> (H.A. CLARK) <br> * Claims; column 4, lines 37-41, 49-50; column 10, lines 45-49 * | 1 | C 08 J 7/04 |
| | <u>GB - A - 1 264 338</u> (ICI) <br> * Claims; page 2, lines 82-92 * | 1 | |
| | <u>GB - A - 812 470</u> (DU PONT DE NEMOURS) <br> * Claims; page 5, lines 20-26 * | 1 | **TECHNICAL FIELDS SEARCHED (Int. Cl.³)** <br><br> C 08 J 7/04 <br> 5/18 |
| AP | <u>WO 80/00969</u> (GENERAL ELECTRIC CY.) | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| | The present search report has been drawn up for all claims | | |
| Place of search <br> The Hague | Date of completion of the search <br> 04-08-1981 | Examiner <br> VAN GOETHEM | |

EPO Form 1503.1   06.78